# FASCICULE DE BREVET EUROPEEN

(11) **EP 3 316 007 B1**
(45) Date de publication et mention de la délivrance du brevet: **29.05.2019**
(21) Numéro de dépôt: 17198327.3
(22) Date de dépôt: 25.10.2017
(51) Int. Cl.: G01W 1/02, G01C 21/36, G01C 21/34, G08G 1/01, G08G 1/09, G08G 1/0967, G08G 1/0968, B60W 40/06

(54) **SYSTÈME DE PARTAGE D'INFORMATIONS UTILISANT DES CAPTEURS D'HYGROMÉTRIE ET DE TEMPÉRATURE DE CHAUSSÉE**
DATENAUSTAUSCHSYSTEM UMFASSEND EINEN FAHRBAHNTEMPERATUR- UND EINEN FEUCHTIGKEITSSENSOR
DATA SHARING SYSTEM USING ROAD TEMPERATURE AND HUMIDITY SENSORS

(30) Priorité: 25.10.2016 FR 1660360
(43) Date de publication de la demande: 02.05.2018
(73) Titulaire: Dreamsafe, 12400 Saint Afrique (FR)
(72) Inventeur: MARQUES, Bertrand, 12400 SAINT AFFRIQUE (FR); SEGURET, Philippe, 12400 SAINT AFFRIQUE (FR); HERRY, Sébastien, 75015 PARIS (FR)
(74) Mandataire: Cabinet Plasseraud

(56) Documents cités:
- WO-A1-2014/186359
- FR-A1- 3 044 428
- KR-A- 20120 132 849
- US-A- 5 416 476
- US-A1- 2014 190 248
- US-B1- 6 326 893

## Description

La présente invention est relative aux systèmes de partage d'informations utilisant des capteurs d'hygrométrie et de température de chaussée des routes du réseau routier.

### Contexte et Art Antérieur

Il est connu que le verglas qui peut se former parfois sur les routes entraîne des accidents de la circulation routière. Souvent, il est difficile pour les conducteurs de détecter des plaques de verglas et d'anticiper suffisamment pour gérer la situation.

Des constructeurs automobiles ont prévu, grâce à la mesure de la température de l'air extérieur, un avertissement particulier destiné au conducteur, selon lequel un pictogramme est affiché ou un clignotement de la température se produit, par exemple lorsque la température est comprise entre -3°C et +3°C.

Cela peut s'avérer utile, mais les inventeurs ont constaté que cette information n'était pas assez précise, en effet c'est la température de la chaussée elle-même ainsi que l'hygrométrie présente et antérieure qui forment ensemble le critère déterminant pour estimer le risque de formation d'une plaque de verglas.

De plus, l'information donnée sur la température d'air dans l'environnement du véhicule ne permet pas au conducteur d'anticiper, c'est en fait une information trop tardive. De même, un système d'alerte tel que celui enseigné par le document US5416476 s'avère bien trop tardif. Référence est faite également aux systèmes d'alerte des documents WO2014/186359 A1 et US2014/0190248 A1.

Il est donc apparu un besoin d'une part d'améliorer les moyens de détection de possible formation de verglas et d'autre part d'améliorer la mise à disposition des informations disponibles pour les conducteurs en général.

### Résumé de l'invention

A cet effet, il est proposé un système de collecte et de mise à disposition d'informations concernant le risque de gel et/ou de formation de plaques de verglas sur le réseau routier, le système comprenant :
- une pluralité de dispositifs de collecte d'information (1,2), chaque dispositif de collecte étant géolocalisé et configuré pour mesurer au moins la température du sol et l'hygrométrie ambiante et transmettre ces informations à distance par un réseau sans fil, une première partie (E1) des dispositifs de collecte étant installée sur des véhicules et une seconde partie (E2) installée à demeure en bord de route,
- au moins un serveur (3) distant, collectant la remontée d'informations en provenance de la pluralité des dispositifs de collecte, et alimentant une base de données temps réel, et calculant le risque de gel et/ou de formation de plaques de verglas sur chaque segment d'intérêt du réseau routier,
- une pluralité d'applications disponibles sur des appareils électroniques portables (4) ou embarqués à bord de véhicules (90-95), sur lesquels des utilisateurs peuvent consulter une carte de risques de verglas ou grâce auquel un système de navigation peut prendre en compte ces données pour calculer un itinéraire optimal en sécurité.

Grâce à ces dispositions, on peut fournir une cartographie des zones à risques de plaques de verglas en temps réel. De plus, la collecte des données est optimisée en mixant la collecte par des capteurs embarqués et par des capteurs à position fixe. On remarque aussi que le système proposé mobilise très peu des ressources de communication sans fil du fait d'une très faible occupation en bande passante et un faible volume de données.

Selon une option, les dispositifs de collecte installés à demeure en **bord de route** (2,E2) sont **autonomes** en énergie et comprennent une batterie électrique rechargeable (29) et un ensemble de cellules photovoltaïques (27). Ainsi ils ne nécessitent aucun entretien ni remplacement de piles, ce qui représente un optimum technico économique.

Selon une option, les dispositifs de collecte sont configurés pour mesurer la température du sol **à distance** D, ladite distance étant comprise entre 30 cm et 200 cm. C'est bien la température du sol qu'on mesure et pas celle de l'air.

Selon une option, les dispositifs de collecte peuvent être configurés pour mesurer en outre la **température ambiante**. Cela permet de détecter, par corrélation, un éventuel défaut manifeste du capteur de température de sol ; et cela permet de conforter la cartographie.

Selon une option, le réseau de communication sans fil utilise des coupleurs basse consommation. On minimise le coût des ressources de communication sans fil et on peut utiliser un très grand nombre de capteurs sans saturer les ressources de communication hertziennes.

Selon l'invention, chacun des dispositifs (1) de la première partie (E1) fonctionne avec une première fréquence d'activation (F1) variable lorsque les véhicules roulent et chacun des dispositifs (1) de la seconde partie (E2) fonctionne avec une seconde fréquence d'activation (F2) fixe, avec une condition générale **F1 > F2**. On minimise ainsi la consommation sur les dispositifs du second type E2 et on optimise la collecte avec les dispositifs du premier type E1.

Selon l'invention, pour chaque dispositif de collecte de la première partie, la fréquence d'activation (F1) est proportionnelle à la vitesse de déplacement (V) du véhicule sur lequel le dispositif est installé. On obtient ainsi des points de collecte régulièrement espacés.

La présente invention vise par ailleurs aussi une méthode de collecte et de mise à disposition d'informations concernant le risque de gel et/ou de formation de plaques de verglas sur le réseau routier, la méthode comprenant les étapes :
a- mesurer au moins la température du sol et l'hygrométrie ambiante au moyen d'une pluralité de dispositifs de collecte d'information (1,2), chaque dispositif de collecte étant géolocalisé,
b- transmettre à distance par un réseau sans fil (5) vers un serveur (3), les informations géolocalisées de température du sol et d'hygrométrie,
c- collecter dans le serveur la remontée d'informations en provenance de la pluralité des dispositifs de collecte,
d- alimenter une base de données temps réel,
e- calculer le risque de gel et/ou de formation de plaques de verglas sur chaque segment d'intérêt du réseau routier,
f- mettre à disposition une carte de risques de verglas à destination d'une pluralité d'applications disponibles sur des appareils électroniques portables (4) ou embarqués à bord de véhicules, sur lesquels des utilisateurs peuvent consulter une carte de risques de verglas ou grâce auquel un système de navigation peut prendre en compte ces données pour calculer un itinéraire optimal en sécurité.

Selon l'invention, une première partie (E1) des dispositifs de collecte est installée sur des véhicules et une seconde partie (E2) est installée à demeure en bord de route, et chacun des dispositifs (1) de la première partie (E1) fonctionne avec une première fréquence d'activation (F1) variable lorsque les véhicules roulent et chacun des dispositifs (2) de la seconde partie (E2) fonctionne avec une seconde fréquence d'activation (F2) fixe, avec une condition générale **F1 > F2**.

### Description des figures

D'autres aspects, buts et avantages de l'invention apparaîtront à la lecture de la description suivante d'un mode de réalisation de l'invention, donné à titre d'exemple non limitatif. L'invention sera également mieux comprise en regard des dessins joints sur lesquels :
- la figure 1 représente schématiquement un système de partage d'informations avec des véhicules équipés de dispositifs de collecte d'informations et des applications de visualisation et d'utilisation de la cartographie des zones à risques de verglas,
- la figure 2 représente une coupe d'une chaussée de réseau routier équipée de dispositifs de collecte installés à demeure,
- la figure 3 représente une portion de réseau routier illustrant l'installation des dispositifs de collecte en bordure de route et dans les véhicules qui circulent,
- la figure 4 illustre un exemple de procédé utilisé pour collecter et partager des informations,
- la figure 5 représente un bloc diagramme de dispositif de collecte autonome tel que ceux installés à demeure en bordure de route,
- la figure 6 représente un bloc diagramme de dispositif de collecte embarqué tel que ceux installés à bord de véhicules,
- la figure 7 illustre un exemple de restitution cartographique,
- la figure 8 illustre les fréquences d'activation des capteurs, à savoir mesure et envoi d'informations vers le serveur par le réseau à bas débit.

Sur les différentes figures, les mêmes références désignent des éléments identiques ou similaires.

### Description détaillée

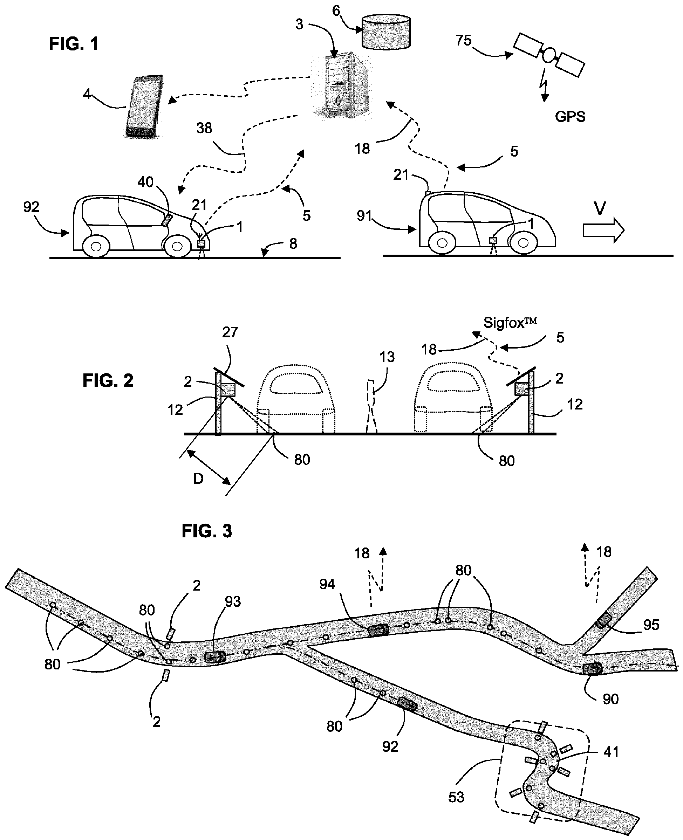

Les figure 1 à 3 montrent une vue d'ensemble d'un système **10** de collecte et partage d'information au sujet de la présence de gel et du risque de présence de plaques de verglas sur des segments de chaussée du réseau routier.

Le système utilise tout d'abord un ensemble de géolocalisation par satellites **75** bien connu sous le vocable GPS ; on note que d'autres systèmes équivalents comme Glonass ou Galileo peuvent aussi être utilisés.

Certains véhicules **90** sont équipés d'un boîtier capteur **1**, autrement appelé d'une manière générique « dispositif de collecte d'informations » **1**.

Selon une configuration, ce boîtier capteur 1 se présente comme un équipement additionnel relié au véhicule seulement par l'alimentation électrique et possédant par ailleurs plusieurs fonctionnalités comme réception GPS, émission de données par un réseau de communication sans fil, un capteur de température à distance pour mesurer la température de la chaussée **8**, un capteur d'hygrométrie pour mesurer l'humidité de l'air ambiant.

Selon une variante de solution, illustrée par le véhicule repéré **91**, le véhicule est équipé dès sa fabrication des fonctionnalités liées à la collecte d'informations sur la température pour mesurer la température de la chaussée **8**; selon un exemple parmi d'autres on dispose un capteur de température distante 1' dirigé vers le sol, le capteur d'hygrométrie, le capteur de température d'air ambiant, le récepteur GPS pouvait faire déjà partie de l'équipement de base du véhicule. Le réseau de communication sans fil pour transmettre les informations collectées à destination d'un serveur distant peut lui aussi être un équipement de base du véhicule.

En référence à la figure 2, on dispose un deuxième type de dispositifs de collecte de données référencés **2**, à des emplacements prédéterminés au bord de la route. Plus précisément, on installe ces boîtiers capteur **2** sur des poteaux **12**, ou bien sur des glissières de sécurité **13** déjà existantes. Le capteur de température à distance vise en oblique une portion de chaussée **80**.

De préférence, le positionnement de ces boîtiers capteur est fixe ; toutefois il n'est pas exclu qu'il y ait un mouvement commandé qui permet à partir de ce boîtier capteur 2 de mesurer la température de la chaussée en quelques points distincts. Comme il sera vu plus loin, les boîtiers capteur **2** sont autonomes et sont alimentés par un panneau solaire **27** équipé de cellules photovoltaïques.

Pour revenir aux capteurs **1** du premier type embarqués à bord de véhicules, ceux-ci sont configurés pour mesurer la température de chaussée pendant qu'ils se déplacent sur des zones de pointage **80** du capteur de température à distance ; ainsi, on peut multiplier les prises d'informations tout au long du parcours du véhicule. Ceci est aussi valable pour tous les autres véhicules équipés d'une telle fonction de collecte. Par conséquent, le nombre de points de mesure relevés peut être avantageusement très important. Des dispositifs de collecte peuvent être montés sur différents types de véhicules par exemple camions, de fourgons, motos, etc.

De plus, il est particulièrement avantageux d'avoir des informations récentes à propos de la température de chaussée ; on utilise une base de données cartographique 6 de ces informations dans au moins un serveur informatique **3** ; cette base de données **6** est en outre mise à jour en temps réel.

Et donc par conséquent le rafraîchissement des informations est particulièrement important. On met à profit le parcours de véhicules équipés sur le réseau routier pour collecter naturellement les informations de température de chaussée. Sur les portions de routes **53** qui sont habituellement soumises à des phénomènes de verglas, on comprend que dans ces conditions, il est avantageux de prévoir des dispositifs de collecte **2** à positions fixes qui peuvent donner un rafraîchissement des informations même si aucun véhicule équipé de capteurs n'est passé par là récemment. On peut ainsi traiter particulièrement les courbes de route **41** ou la présence d'une plaque de verglas est particulièrement redoutable, en installant des boîtiers capteur de 2eme type dans ces zones potentiellement accidentogènes.

Chaque dispositif de collecte, après une brève mesure, transmet un message **18** portant ces informations collectées via un réseau de communication sans fil à bas débit **5**. Dans l'exemple illustré, on utilise pour ce réseau de communication le réseau à bas débit nommé Sigfox™, optimisé pour l'internet des objets, à savoir faible consommation et bas débit donc faible occupation des ressources de communication sans fil ; toutefois l'utilisation d'un réseau de type LoRa™ ou équivalent peut être aussi envisagé.

Pour les dispositifs de collecte **2** postés en bande route, il est prévu une fréquence d'activation fixe **F2**. Cette fréquence **F2** est assez lente pour des raisons qui seront vues plus loin.

En revanche, s'agissant des boîtiers de collecte installés sur des véhicules qui roulent, il est prévu que la fréquence d'activation **F1** pour chaque boîtier soit variable, et en particulier dans une certaine mesure proportionnelle à la vitesse instantanée de déplacement **V** du véhicule sur lequel chaque boîtier est installé. Ainsi, chaque véhicule permet de collecter des informations de température sur une série de points **80** plutôt régulièrement espacés.

Ainsi, grâce à un premier sous-ensemble **E1** de dispositifs de collecte géolocalisés du premier type installés à bord des véhicules (**91**,**92**,**93**,**94**,**95**) et à un second sous-ensemble **E2** de dispositifs de collecte du second type installés en bord de route, on peut disposer d'une cartographie temps réel grâce au stockage dans le serveur 3 et d'un historique des températures de chaussée ainsi que des informations d'hygrométrie (taux d'humidité).

L'ensemble de capteurs **E** formé par la réunion du premier sous-ensemble **E1** et du deuxième sous-ensemble **E2** constitue un optimum pour collecter un grand nombre d'informations pertinentes avec un nombre modéré de boîtiers capteur.

Le serveur distant **3** collecte en permanence la remontée d'informations en provenance des divers dispositifs de collecte, et alimente la base de données temps réel **6**. Outre les dernières valeurs reçues, la base de données peut optionnellement stocker l'historique récent par exemple les valeurs enregistrées au cours de l'heure qui précède.

Le serveur distant **3** calcule le risque de gel et/ou de formation de plaques de verglas sur chaque segment d'intérêt du réseau routier.

S'agissant de la cartographie routière, selon les dispositions déjà connues pour les applications d'info trafic, on découpe le réseau routier en une pluralité de segments chacun ayant un code appelé « TMC code » ; chaque segment est affecté d'un index de probabilité de verglas, un pour chaque sens de circulation optionnellement.

Bien entendu, le territoire d'intérêt est découpé en différentes zones géographiques ce qui permet de spécialiser la diffusion d'informations selon la localisation géographique effective de l'utilisateur. On peut ainsi minimiser le volume des données descendantes et les spécialiser à la zone où le mobile demandeur se trouve.

Le serveur distant **3** met à disposition ces informations à des utilisateurs, en particulier pour des applications disponibles sur des appareils électroniques portables **4** (smartphone typiquement) ou appareils de navigation **40** embarqués à bord de véhicules (équipés ou non de boîtiers de collecte). Les utilisateurs de smartphones 4 peuvent ainsi consulter une carte de risques de verglas. Les appareils de navigation **40** peuvent prendre en compte ces données pour calculer un itinéraire optimal en sécurité.

Le capteur utilisé pour mesurer la température à distance, est un capteur de type infrarouge spectral ; on peut utiliser un capteur de type Thermopile, pyromètre monochromatique, pyromètre bi-chromatique.

Parmi les choix possibles, on peut citer les gammes de composants Warsash Scientific™ DigiPile™, Excelitas™ DigiPyro®, Melexis™ MLX90614, etc...

De préférence, on choisit un composant capteur infrarouge **24** pour mesurer la température de la chaussée avec une précision au demi-degré (0,5°C) ou plus précis.

Le capteur mesure la température du sol à distance **D**, ladite distance D étant comprise entre 20 cm et 200 cm. Pour les dispositifs embarqués **1**, la distance D est de l'ordre de 20 cm à 30 cm. Pour les dispositifs postés en bord de route **2**, la distance D est de l'ordre de 100 cm à 200 cm suivant le type d'installation.

Outre la température du sol, le boitier capteur de deuxième type peut en outre mesurer la température ambiante, c'est-à-dire la température de l'air. Cette information permet de conforter la validité de la mesure de la température sol ; en effet, l'écart entre température sol et température ambiante peut aller de zéro à 5° ou 6°, mais au-delà, cela dénote une incohérence de mesure et cela peut conduire à demander le nettoyage de la paroi transparente de protection du capteur à distance.

Le serveur distant **3** envoie dans un réseau de diffusion via communication sans fil des messages **38** représentant des segments routiers sur lesquels le risque de plaques de verglas dépasse un seuil prédéterminé. La mise à disposition des informations peut être faite en mode de diffusion ('Broadcast') ou bien selon une logique de requêtes client-serveur. Le mode utilisé peut être dépendant du type d'appareils de réception, à savoir un Smartphone relié par une liaison de données sans fil, un ordinateur ou une tablette directement connectée à Internet en haut débit, un système de navigation embarqué à bord d'un véhicule, et de la position géographique courante.

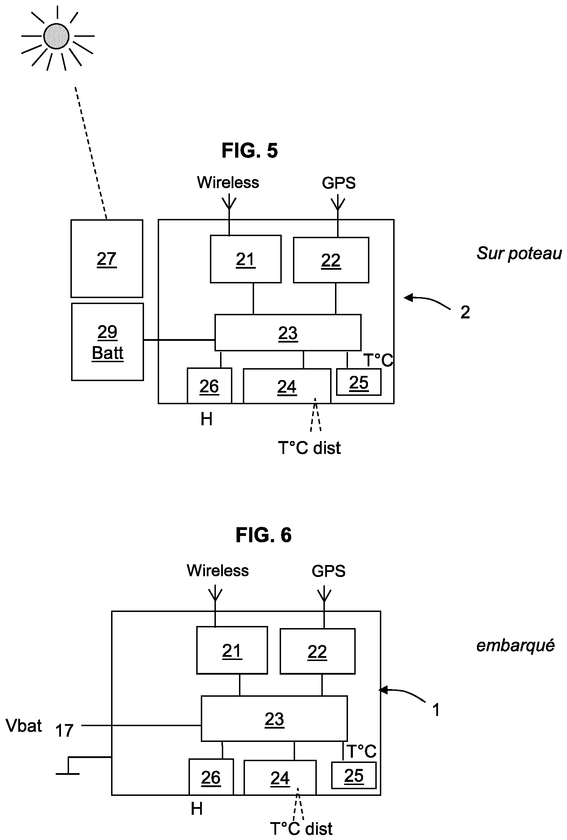

Sur la figure 5, on a représenté un boîtier capteur / dispositif de collecte du deuxième type, à savoir installé sur un poteau ou plus généralement sur l'infrastructure de bord de route. Il n'est pas exclu d'avoir ce type de boîtier installé en zone supérieure sur un portique.

Pour l'alimentation en énergie électrique, on utilise un petit panneau solaire **27** équipé d'une pluralité de cellules photoélectriques comme connu en soi. Le panneau solaire alimente en énergie électrique une batterie rechargeable **29** dont la capacité est choisie typiquement entre 1Ah et 3Ah.

Dans certains cas, il est possible de prévoir de déporter le panneau solaire comme dans le cas où le capteur infrarouge est installé dans un tunnel du réseau routier.

Le dispositif de collecte **2** du deuxième type comprend en outre un microprocesseur **23** formant l'unité de calcul principal, un coupleur de communication sans fil **21**, un récepteur de signaux GPS **22**, un capteur d'humidité **26** (capteur d'hygrométrie), le capteur de température distante **24** déjà mentionné plus haut, et un capteur de température ambiante **25**.

Comme illustré sur la figure 6, les dispositifs de collecte **1** du premier type comprennent les mêmes composants excepté la source d'alimentation électrique qui dans ce cas est une connexion filaire à deux bornes, une alimentation positive Vbat **17** et un raccordement à la masse du véhicule.

On comprend dès lors que les dispositifs de collecte du premier type, étant alimentés par l'équipement électrique du véhicule le plus souvent pendant le cycle de conduite, ils ne sont pas soumis aux mêmes exigences de faible consommation électrique que les dispositifs de collecte 2 du second type.

Pour être suffisamment autonome en énergie la nuit et même sur 48 ou 72 heures d'affilée avec météo couverte (nuages bas, brouillard), les dispositifs de collecte 2 du second type présentent par conséquent un cycle d'activation assez lent correspondant à la deuxième fréquence **F2** déjà mentionnée, avec une activation périodique de période **T2** par exemple toutes les 10 minutes. Avec une batterie dimensionnée à 1Ah, on obtient une autonomie de trois jours, avec une batterie dimensionnée à 3Ah, on obtient une autonomie de plus d'une semaine. Une batterie plus conséquente peut être prévue pour traiter le cas des zones souvent enneigées.

On remarque qu'entre deux activations, le dispositif de collecte tombe dans un état de sommeil avec consommation électrique minimale (Seule une horloge basse fréquence et basse consommation continues à tourner). On remarque aussi que l'interface de communication sans fil envoie des données et n'est pas prévue pour recevoir de données, ce qui limite fortement la consommation électrique.

Bien entendu, l'orientation du panneau solaire **27** est choisie pour optimiser le flux lumineux moyen journalier de soleil.

Quant aux dispositifs de collecte **1** du premier type, on optimise leur masse et leur encombrement, typiquement un boîtier 1 du premier type aura une masse inférieure à 100 g et de manière plus préférée inférieure à 50 g et pourra tenir dans un parallélépipède de 10cmX10cmX4cm.

D'une manière générale, une intégration mécatronique permettra de diminuer la taille d'un dispositif de collecte jusqu'à la taille d'un paquet de cigarettes, à savoir 20mm X 55mm X 90mm.

On note que le serveur distant **3** peut être formé en variante par des ressources variées dans le cloud informatique.

Pour calculer un indice de risque de plaques de verglas à chaque instant T, pour chaque point cartographié, on prend en compte la mesure de taux d'humidité cumulé sur une période prédéterminée précédent l'instant T, et le profil de température à l'instant T ainsi que dans la période prédéterminée précédent l'instant T.

Le calcul de l'indice de risque de verglas peut aussi prendre en compte la position cartographique et géographique de chacun des points/portions de route. Par exemple, on peut avoir des paramètres de correction pour traiter les cas d'une route sur un pont, dans une zone qui reste à l'ombre très tard, dans une zone bordée par un massif forestier, une zone venteuse, etc. Bien entendu, la date du jour dans la saison est aussi un paramètre qui peut influencer le calcul de risques de verglas.

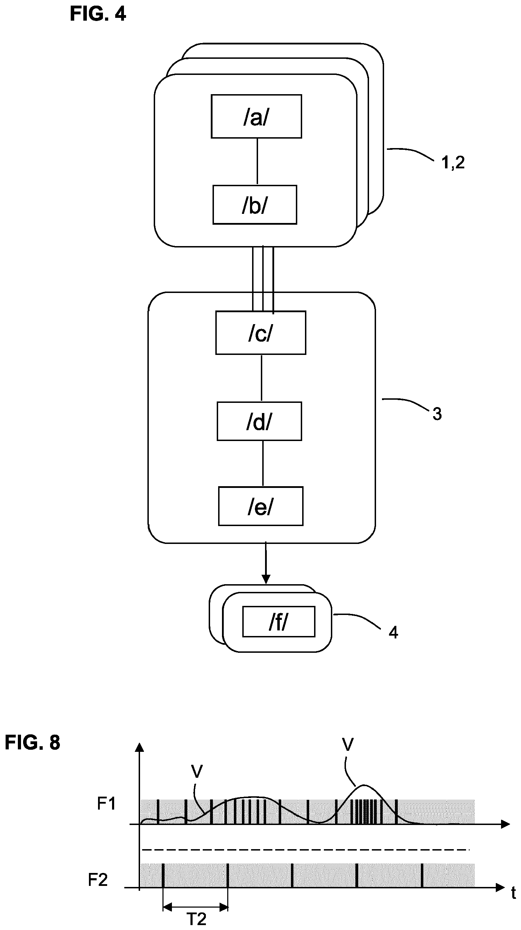

Sur la figure 8, on voit que la fréquence **F1** utilisée comme fréquence d'activation des boîtiers de collecte du premier type est variable, et cette fréquence peut être ajustée, sur chacun des dispositifs de collecte, en fonction de la vitesse d'avancement **V** du véhicule.

Par exemple on pourrait choisir F1 = 0,2 Hz + V/5 Hz, V étant exprimé en mètre par seconde, ce qui donne une activation toutes les cinq secondes à vitesse nulle ou quasi nulle.

On peut aussi choisir F1 = V/5 Hz, V étant exprimé en mètre par seconde, aucune mesure n'étant réalisé lorsque le véhicule est à l'arrêt.

En règle générale, pour les véhicules roulants, on observera **F1 > F2** nonobstant les variations de **F1**.

La figure 4 illustre la méthode employée dans l'exemple donné.
Etape a) chaque dispositif géolocalisé de collecte mesure au moins la température du sol et l'hygrométrie.
Etape b) chaque dispositif de collecte transmet 18 à distance par le réseau sans fil 5 vers le serveur 3, les informations géolocalisées de température du sol et d'hygrométrie,
Etape c) le serveur collecte la remontée d'informations en provenance des dispositifs de collecte, et alimente la base de données **6** temps réel (étape d)).
Dans le serveur, on calcule le risque de gel et/ou de formation de plaques de verglas sur chaque segment d'intérêt du réseau routier (étape e)).

Puis (étape f)) on met à disposition une cartographie des risques de verglas à destination des applications disponibles sur des appareils électroniques portables 4 ou embarqués 40 à bord de véhicules.

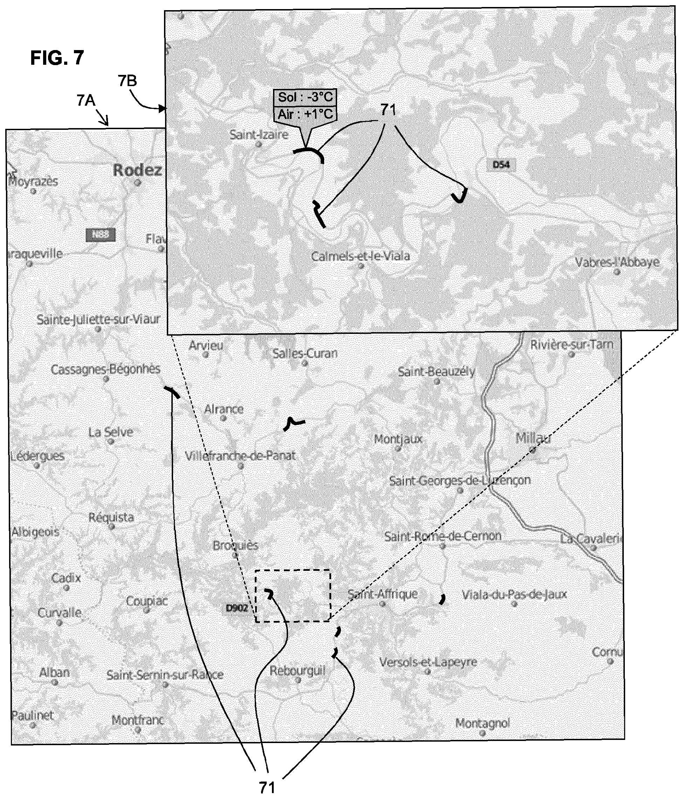

La figure 7 illustre un exemple de restitution cartographique avec les zones à risques de verglas **71** qui sont mis en valeur, soit par une couleur particulière, soit par une épaisseur de rendu particulière, soit par les deux combinés.

On peut disposer d'une carte générale **7A** et d'une ou plusieurs portions de carte zoomées **7B**. En glissant le pointeur (souris ou doigt sur un point particulier), on peut faire afficher la température du sol et celle de l'air dans une bulle pop-up.

La restitution cartographique suit aussi en temps réel la base de données **6** du serveur **3** et les indices de risques.

Il faut noter qu'il n'est pas exclu d'installer des dispositifs de collecte **2** du deuxième type, c'est-à-dire autonomes en énergie grâce au panneau solaire, sur des véhicules.

Concernant le packaging des dispositifs de collecte, notamment ceux du second type, l'ensemble de l'électronique est contenu dans un boîtier étanche avec une performance d'étanchéité de préférence supérieure ou égale à IP68.

On peut prévoir un nettoyage périodique de la face frontale du capteur de température à distance, soit par maintenance manuelle, soit par une petite buse de soufflage d'air que la face avant du capteur à distance, activée par exemple une ou deux fois par jour.

La base de données temps réel **6** est incrémentale, c'est-à-dire, que le volume de données augmente avec le temps et nombre de véhicules en circulation équipée de capteurs ainsi que l'équipement croissant des portions de routes à risques de verglas avec des capteurs de ce type en bord de route.

Selon un autre aspect avantageux, on mesure la température de chaussée sans mettre aucun élément physique dans la chaussée elle-même. Ainsi les produits de déverglaçage, les hydrocarbures et huiles, et autres produits chimiques qui peuvent être présents sur la chaussée n'ont aucun impact sur le bon fonctionnement à long terme du système ; à l'inverse des capteurs implantés dans le chaussée qui sont endommagés par de tels produits ainsi que par l'abrasion mécanique du roulement des véhicules.

## Revendications

1. Système de collecte et de mise à disposition d'informations concernant le risque de gel et/ou de formation de plaques de verglas sur le réseau routier, le système comprenant :
- une pluralité de dispositifs de collecte d'information (1,2), chaque dispositif de collecte étant géolocalisé et configuré pour mesurer au moins la température du sol et l'hygrométrie ambiante et transmettre ces informations à distance par un réseau sans fil, une première partie (E1) des dispositifs de collecte étant installée sur des véhicules et une seconde partie (E2) installée à demeure en bord de route,
- au moins un serveur (3) distant collectant la remontée d'informations en provenance de la pluralité des dispositifs de collecte, et alimentant une base de données temps réel, et calculant le risque de gel et/ou de formation de plaques de verglas sur chaque segment d'intérêt du réseau routier,
- une pluralité d'applications disponibles sur des appareils électroniques portables (4) ou embarqués à bord de véhicules (90-95), sur lesquels des utilisateurs peuvent consulter une carte de risques de verglas ou grâce auquel un système de navigation peut prendre en compte ces données pour calculer un itinéraire optimal en sécurité,
**caractérisé en ce que** chacun des dispositifs (1) de la première partie (E1) fonctionne avec une première fréquence d'activation (F1) variable lorsque les véhicules roulent et chacun des dispositifs (1) de la seconde partie (E2) fonctionne avec une seconde fréquence d'activation (F2) fixe, avec une condition générale **F1 > F2,** et pour chaque dispositif de collecte de la première partie, la fréquence d'activation (F1) est proportionnelle à la vitesse de déplacement (V) du véhicule sur lequel le dispositif est installé.

2. Système selon la revendication 1, dans lequel les dispositifs de collecte installés à demeure en bord de route (2,E2) sont autonomes en énergie et comprennent une batterie électrique rechargeable (29) et un ensemble de cellules photovoltaïques (27).

3. Système selon l'une des revendications 1 à 2, dans lequel les dispositifs de collecte sont configurés pour mesurer la température du sol à distance D, ladite distance étant comprise entre 30 cm et 200 cm.

4. Système selon l'une des revendications 1 à 3, dans lequel les dispositifs de collecte sont configurés pour mesurer en outre la température ambiante.

5. Système selon l'une des revendications 1 à 4, dans lequel le réseau de communication sans fil utilise des coupleurs basse consommation.

6. Méthode de collecte et de mise à disposition d'informations concernant le risque de gel et/ou de formation de plaques de verglas sur le réseau routier, la méthode comprenant les étapes :
a- mesurer au moins la température du sol et l'hygrométrie ambiante au moyen d'une pluralité de dispositifs de collecte d'information (1,2), chaque dispositif de collecte étant géolocalisé,
b- transmettre à distance par un réseau sans fil (5), vers un serveur (3), les informations géolocalisées de température du sol et d'hygrométrie,
c- collecter dans le serveur la remontée d'informations en provenance de la pluralité des dispositifs de collecte,
d- alimenter une base de données temps réel,
e- calculer le risque de gel et/ou de formation de plaques de verglas sur chaque segment d'intérêt du réseau routier,
f- mettre à disposition une carte de risques de verglas à destination d'une pluralité d'applications disponibles sur des appareils électroniques portables (4) ou embarqués à bord de véhicules,
**caractérisée en ce qu'**une première partie (E1) des dispositifs de collecte est installée sur des véhicules et une seconde partie (E2) est installée à demeure en bord de route, et
chacun des dispositifs (1) de la première partie (E1) fonctionne avec une première fréquence d'activation (F1) variable lorsque les véhicules roulent, ladite première fréquence d'activation étant proportionnelle à la vitesse de déplacement (V) du véhicule sur lequel le dispositif est installé, et chacun des dispositifs (2) de la seconde partie (E2) fonctionne avec une seconde fréquence d'activation (F2) fixe, avec une condition générale F1 > F2.

## Patentansprüche

1. System zum Sammeln und Bereitstellen von Informationen betreffend das Risiko von Frost und/oder der Bildung von Glatteis auf dem Straßennetz, wobei das System aufweist:
- eine Vielzahl von Informations-Sammelvorrichtungen (1, 2), wobei jede Sammelvorrichtung georeferenziert und eingerichtet ist, mindestens die Bodentemperatur und/oder die Umgebungsluftfeuchte zu messen und diese Informationen über ein Drahtlosnetzwerk fernzuübertragen, wobei ein erster Teil (E1) der Sammelvorrichtungen an den Fahrzeugen montiert ist, und ein zweiter Teil (E2) stationär am Straßenrand montiert ist,
- zumindest einen Remote-Server (3), der den Wiederanstieg von Informationen, die von der Vielzahl von Sammelvorrichtungen stammen, sammelt, und der eine Echtzeitdatenbank speist, und das Risiko von Frost und/oder Glatteis auf jedem Abschnitt des Straßennetzes, der von Bedeutung ist, berechnet,
- eine Vielzahl von auf den tragbaren elektronischen Geräten (4) abrufbaren oder an Bord der Fahrzeuge (90-95) abrufbaren Anwendungen, auf denen die Nutzer eine Glatteis-Gefahrenkarte zu Rate ziehen können oder dank derer ein Navigationssystem diese Daten für die Berechnung einer optimalen Sicherheitsmaßnahme berücksichtigen kann,
**dadurch gekennzeichnet, dass** jede der Vorrichtungen (1) des ersten Abschnitts (E1) mit einer ersten, variablen Aktivierungsfrequenz (F1) betrieben wird, wenn die Fahrzeuge fahren, und jede der Vorrichtungen (1) des zweiten Abschnitts (E2) mit einer zweiten, festen Aktivierungsfrequenz (F2) betrieben wird, mit einer Allgemeinbedingung **F1 > F2**, und dass für jede Sammelvorrichtung des ersten Abschnitts die Aktivierungsfrequenz (F1) proportional zur Fortbewegungsgeschwindigkeit (V) des Fahrzeugs ist, an dem die Vorrichtung montiert ist.

2. System nach Anspruch 1, wobei die Sammelvorrichtungen, die stationär am Straßenrand (2, E2) verbaut sind, energieunabhängig sind und eine elektrische, wiederaufladbare Batterie (29) und eine Photovoltaikzellenanordnung (27) aufweisen.

3. System nach einem der Ansprüche 1 bis 2, wobei die Sammelvorrichtungen eingerichtet sind, die Bodentemperatur bei Entfernung D zu messen, wobei diese Entfernung zwischen 30 und 200 cm beträgt.

4. System nach einem der Ansprüche 1 bis 3, wobei die Sammelvorrichtungen eingerichtet sind, ferner die Umgebungstemperatur zu messen.

5. System nach einem der Ansprüche 1 bis 4, wobei das Drahtloskommunikationsnetz Koppler mit niedrigem Verbrauch verwendet.

6. Verfahren zum Sammeln und Bereitstellen von Informationen betreffend das Risiko von Frost und/oder der Bildung von Glatteis auf dem Straßennetz, das Verfahren umfassend die Schritte:
a) Messen zumindest der Bodentemperatur und/oder der Umgebungsfeuchte mittels einer Vielzahl von Vorrichtungen zum Sammeln von Informationen (1, 2), wobei jede Sammelvorrichtung georeferenziert ist,
b) Fernübertragen der georeferenzierten Informationen von Bodentemperatur und Feuchtigkeit über ein Drahtlosnetzwerk (5) an einen Server (3),
c) Sammeln, in dem Server, den Wiederanstieg von Informationen, die von der Vielzahl von Sammelvorrichtungen stammen,
d) Speisen einer Echtzeitdatenbank,
e) Berechnen der Gefahr von Frost und/oder von Glatteis in jedem Abschnitt des Straßennetzes, der von Bedeutung ist,
f) Bereitstellen einer Glatteis-Gefahrenkarte einer Vielzahl von Anwendungen, die auf den tragbaren elektronischen Vorrichtungen (4) abrufbar oder an Bord des Fahrzeugs vorhanden sind,
**dadurch gekennzeichnet, dass** ein erster Abschnitt (E1) der Sammelvorrichtungen an den Fahrzeugen montiert ist und ein zweiter Abschnitt (E2) stationär am Straßenrand montiert ist, und
jede der Vorrichtungen (1) des ersten Abschnitts (E1) mit einer ersten, variablen Aktivierungsfrequenz (F1) betrieben wird, wenn die Fahrzeuge fahren, wobei diese erste Aktivierungsfrequenz proportional zur Fortbewegungsgeschwindigkeit (V) des Fahrzeugs ist, an dem die Vorrichtung montiert ist, und jede der Vorrichtungen (2) des zweiten Abschnitts (E2) mit einer zweiten festen Aktivierungsfrequenz (F2) betrieben wird, wobei allgemein gilt: F1 > F2.

## Claims

1. System for collecting and making available information relating to the risk of freezing and/or the formation of black ice on the road network, the system comprising:
- a plurality of information-collection devices (1, 2), each collection device being geolocated and configured to measure at least the temperature of the ground and the ambient humidity and to transmit this information remotely by means of a wireless network, a first part (E1) of the collection devices being installed on vehicles and a second part (E2) installed permanently at the roadside,
- at least one remote server (3) collecting the transfer of information coming from the plurality of collection devices, and supplying a real-time database, and calculating the risk of freezing and/or the formation of sheets of black ice on each segment of interest of the road network,
- a plurality of applications available on portable electronic appliances (4) or installed on board vehicles (90-95), on which users can consult a map of risks of black ice or by means of which a navigation system can take into account these data for calculating an optimum safe itinerary,
**characterised in that** each of the devices (1) of the first part (E1) functions with a variable first activation frequency (F1) when the vehicles are travelling, and each of the devices (1) of the second part (E2) functions with a fixed second activation frequency (F2) with a general condition F1 > F2, and for each collection device of the first part the activation frequency (F1) is proportional to the speed of movement (V) of the vehicle on which the device is installed.

2. System according to claim 1, in which the collection devices permanently installed at the roadside (2, E2) are self-contained with respect to power and comprise a rechargeable electric battery (29) and a set of photovoltaic cells (27).

3. System according to either claim 1 or claim 2, in which the collection devices are configured to measure the temperature of the ground at distance D, said distance being between 30 cm and 200 cm.

4. System according to any of claims 1 to 3, in which the collection devices are configured also to measure the ambient temperature.

5. System according to any of claims 1 to 4, in which the wireless communication network uses low-consumption couplers.

6. Method for collecting and making available information relating to the risk of freezing and/or the formation of sheets of black ice on the road network, the method comprising the steps of:
a - measuring at least the temperature of the ground and the ambient humidity by means of a plurality of information collection devices (1, 2), each collection device being geolocated,
b - transmitting remotely, by means of a wireless network (5), to a server (3), the geolocated information on the temperature of the ground and humidity,
c - collecting in the server the transfer of information coming from the plurality of collection devices,
d - supplying a real-time database,
e - calculating the risk of freezing and/or formation of sheets of black ice on each segment of interest of the road network,
f - making available a map of risks of black ice intended for a plurality of applications available on portable electronic appliances (4) or installed on board vehicles,
**characterised in that** a first part (E1) of the collection devices is installed on vehicles and a second part (E2) is installed permanently at the roadside, and
each of the devices (1) of the first part (E1) functions with a variable first activation frequency (F1) when the vehicles are travelling, said first activation frequency being proportional to the speed of movement (V) of the vehicle on which the device is installed, and each of the devices (2) of the second part (E2) functions with a fixed second activation frequency (F2), with a general condition F1 > F2.
